# FASCICULE DE BREVET EUROPEEN

(11) **EP 2 786 195 B1**
(45) Date de publication et mention de la délivrance du brevet: **14.10.2015**
(21) Numéro de dépôt: 12794300.9
(22) Date de dépôt: 27.11.2012
(51) Int. Cl.: G02B 27/01

(54) **DISPOSITIF D'AFFICHAGE TÊTE HAUTE A COMBINEUR ESCAMOTABLE**
HEAD-UP-ANZEIGEVORRICHTUNG MIT VERSENKBAREM KOMBINIERER
HEAD-UP DISPLAY DEVICE COMPRISING A RETRACTABLE COMBINER

(30) Priorité: 28.11.2011 FR 1160859
(43) Date de publication de la demande: 08.10.2014
(73) Titulaire: Delphi Technologies, Inc., Troy, MI 48007 (US)
(72) Inventeur: MOUSSA, Hassan, F-67400 Illkirch (FR); MAHR, Christophe, F-67320 Adamswiller (FR)
(74) Mandataire: Delphi France SAS
(86) Numéro de dépôt international: PCT/EP2012/073716
(87) Numéro de publication internationale: WO 2013/079479

(56) Documents cités:
- WO-A2-2008/063632
- US-A- 5 204 666
- US-A1- 2002 167 189

## Description

### Domaine technique

L'invention concerne un dispositif d'affichage tête haute (en anglais : « head up display »), notamment pour véhicules automobiles, camions, bus, trains, avions etc. En particulier, l'invention concerne un dispositif d'affichage tête haute à combineur escamotable.

### Etat de la technique

Un dispositif d'affichage tête haute comporte typiquement une unité de projection qui produit un faisceau lumineux destiné à être dirigé vers un combineur en vue de projeter des images, notamment des informations de fonctionnement ou de conduite d'un véhicule, sous la forme d'une image virtuelle, dans le champ de vision d'un utilisateur, notamment d'un pilote ou conducteur de véhicule automobile.

Conçus à l'origine pour l'affichage d'informations à des pilotes d'avions de combat, les dispositifs d'affichage tête haute ont aujourd'hui trouvé leur place notamment dans le secteur automobile, plus particulièrement dans les voitures de moyenne et haute gamme. Les dispositifs d'affichage tête haute sont réputés contribuer à la sécurité car ils permettent aux conducteurs de lire les informations sans quitter des yeux la route devant eux. L'image virtuelle contenant les informations affichées est en outre projetée à une distance de quelques mètres devant le conducteur ce qui lui permet de lire les informations sans modification de l'accommodation des yeux.

Il existe des dispositifs d'affichage tête haute qui utilisent une partie du pare-brise comme combineur, c.-à-d. comme l'élément optique qui combine le faisceau lumineux contenant les informations devant être présentées à l'utilisateur avec la lumière provenant de l'environnement. D'autres dispositifs d'affichage tête haute comportent un combineur indépendant du pare-brise. Un tel combineur comprend une lame ayant les propriétés optiques nécessaires pour dévier au moins une partie substantielle du faisceau provenant de l'unité de projection vers l'utilisateur, tout en étant suffisamment transparente pour laisser passer en même temps une partie substantielle de la lumière ambiante provenant de l'environnement.

Il s'est avéré souhaitable de pouvoir protéger les éléments optiques du dispositif d'affichage tête haute, par exemple contre les rayons ultraviolets qui réduisent leur durée de vie, la poussière, l'eau et d'autres influences nuisibles, risquant de détériorer la qualité de la projection.

Le brevet US 5,394,203 décrit un dispositif d'affichage tête haute comprenant un combineur en forme de lame réfléchissante montée basculante et faisant office de couvercle que l'on rabat lorsque le dispositif n'est pas utilisé. Cependant, étant donné que la lame sert de couvercle, un de ses côtés reste exposé aux influences nuisibles. Dans le mode de réalisation montré dans les figures, l'arrière-plan de la lame est opaque, ce qui oblige le conducteur de regarder la route par-dessus la lame et ce qui réduit donc fortement le champ de vision du conducteur. Un dispositif similaire est montré dans la demande de brevet européen EP 2 093 094.

La demande WO 2007/057608 présente un dispositif d'affichage tête haute à combineur escamotable. Le combineur est monté sur un support mobile de sorte à pouvoir être déplacé entre une position d'affichage, dans laquelle le combineur se trouve dressé en face de l'utilisateur, et une position de rangement, dans laquelle le combineur est rentré à l'intérieur du boîtier qui protège l'ensemble des composants optiques et mécaniques du dispositif d'affichage tête haute.

Cependant, un désavantage du dispositif d'affichage tête haute de la demande WO 2007/057608 est que le combineur balaye un espace considérable lors de son déploiement. En particulier, le combineur est d'abord déplacé essentiellement horizontalement en direction du pare-brise, et puis relevé en fin de course. Afin que le combineur ne touche pas le pare-brise, il est donc nécessaire d'installer l'ensemble du dispositif d'affichage tête haute à une distance plus importante du pare-brise.

Un objectif de l'invention est de proposer un dispositif d'affichage tête haute dont le combineur présente une enveloppe de mouvement (c.-à-d. l'espace traversé par le combineur pendant son déploiement ou son retrait) moins importante.

### Description générale de l'invention

Un dispositif d'affichage tête haute comprend un projecteur pour générer un faisceau lumineux chargé d'une information à afficher, un combineur escamotable ayant une position d'affichage pour afficher l'information dans le champ de vision d'un utilisateur et une position de rangement, un système optique définissant un chemin optique entre le projecteur et le combineur lorsque celui-ci se trouve dans sa position d'affichage et un mécanisme d'actionnement pour déplacer le combineur depuis sa position de rangement dans sa position d'affichage et inversement. La position d'affichage et la position de rangement se trouvent respectivement de part et d'autre d'une ouverture de déploiement du combineur. Selon un aspect de l'invention, le mécanisme d'actionnement comprend un chariot élévateur portant le combineur. Le combineur est disposé dressé (c.-à-d. essentiellement vertical, l'angle entre la verticale et le combineur étant au maximum 25°) sur le chariot élévateur. Le mécanisme d'actionnement est configuré de sorte que le chariot élévateur exécute une course uniquement en translation pour mouvoir le combineur entre sa position de rangement et sa position d'affichage. Le dispositif d'affichage tête haute comprend en outre un élément obturateur (p. ex. un volet, un clapet, un couvercle etc.) pour fermer l'ouverture de déploiement lorsque le combineur se trouve dans sa position de rangement. L'élément obturateur est lié au mécanisme d'actionnement de sorte à fermer, respectivement ouvrir l'ouverture de déploiement lors d'au moins une partie de la course en translation du chariot élévateur. En d'autres termes, l'élément obturateur se déplace entre la position fermeture et la position d'ouverture de l'ouverture de déploiement en même temps que le chariot élévateur se déplace sur au moins une partie de sa course en translation.

Selon l'invention, le combineur est monté pivotant sur le chariot élévateur de façon à ce que, dans la position d'affichage du combineur, la direction dans laquelle le combineur renvoie le faisceau lumineux chargé de l'information à afficher puisse être ajustée. De préférence, le combineur est maintenu dressé sur le chariot élévateur par un moyen de ressort. Le combineur venant en appui contre une butée lorsqu'il a atteint sa position d'affichage, le chariot élévateur appuie contre le moyen de ressort à la fin de sa course en translation et fait ainsi pivoter le combineur. Pour l'ajustage de la direction dans laquelle le combineur renvoie le faisceau lumineux chargé de l'information à afficher, la fin de course du chariot est réglable.

De préférence, le mécanisme d'actionnement comprend un moyen de guidage, p.ex. un rail, une tige, une rainure, etc., définissant la trajectoire du chariot élévateur.

Le mécanisme d'actionnement comprend de préférence un moyen d'entraînement, p.ex. un moteur électrique.

Selon un mode de réalisation avantageux de l'invention, le chariot élévateur est déplaçable en translation au moyen d'une transmission à vis d'entraînement, une transmission à courroie, un filin ou une transmission de pignon-crémaillère.

L'élément obturateur comprend de préférence un bras d'actionnement et peut pivoter autour d'un axe, le bras d'actionnement coopérant avec le chariot élévateur par un mécanisme à au moins une coulisse, l'au moins une coulisse ayant un tracé conçu de sorte à ce que l'élément obturateur pivote autour de son axe lors de l'au moins une partie de la course en translation du chariot élévateur.

Selon un mode de réalisation préféré de l'invention, le chemin optique entre le projecteur et le combineur lorsque celui-ci se trouve dans sa position d'affichage passe par l'ouverture de déploiement du combineur, et l'élément obturateur protège les éléments optiques exposés de l'eau et de la poussière.

Selon un autre mode de réalisation préféré de l'invention, le chemin optique entre le projecteur et le combineur lorsque celui-ci se trouve dans sa position d'affichage passe par une deuxième ouverture. Cette deuxième ouverture peut de préférence être fermée par un deuxième élément obturateur, le deuxième élément obturateur étant lié au mécanisme d'actionnement de sorte à fermer ou ouvrir la deuxième ouverture lors d'au moins une partie de la course en translation du chariot élévateur. Le deuxième élément obturateur est de préférence monté pivotable et relié à l'élément obturateur de l'ouverture de déploiement de sorte à être entraîné simultanément avec l'élément obturateur de l' ouverture de déploiement.

### Brève description des dessins

D'autres particularités et caractéristiques de l'invention ressortiront de la description détaillée de quelques modes de réalisation avantageux présentés ci-dessous, à titre d'illustration, avec référence aux dessins annexés. Ceux-ci montrent:
Fig. 1: une vue de côté d'un exemple de dispositif d'affichage tête haute, le combineur se trouvant dans sa position de rangement ;
Fig. 2: une vue de côté du dispositif de la figure 1, le combineur se trouvant dans sa position d'affichage;
Fig. 3: une vue tridimensionnelle d'un dispositif d'affichage tête haute selon un mode de réalisation de l'invention, le combineur se trouvant dans sa position de rangement ;
Fig. 4: une vue tridimensionnelle du dispositif de la figure 3, le combineur se trouvant dans une position intermédiaire entre la position de rangement et la position d'affichage ;
Fig. 5: une vue tridimensionnelle du dispositif de la figure 3, le combineur se trouvant dans la position d'affichage ;
Fig. 6 : une vue de côté d'un dispositif d'affichage tête haute selon un mode de réalisation de l'invention ;
Figs.7 à 10 : des coupes dans le plan vertical comprenant l'axe de pivotement du combineur de la figure 6.

### Description d'une exécution préférée

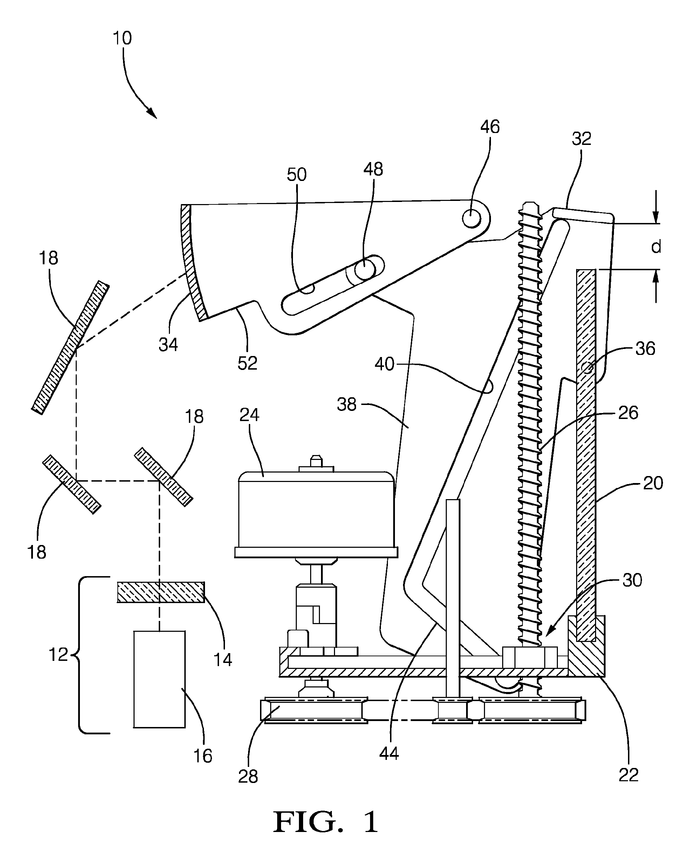

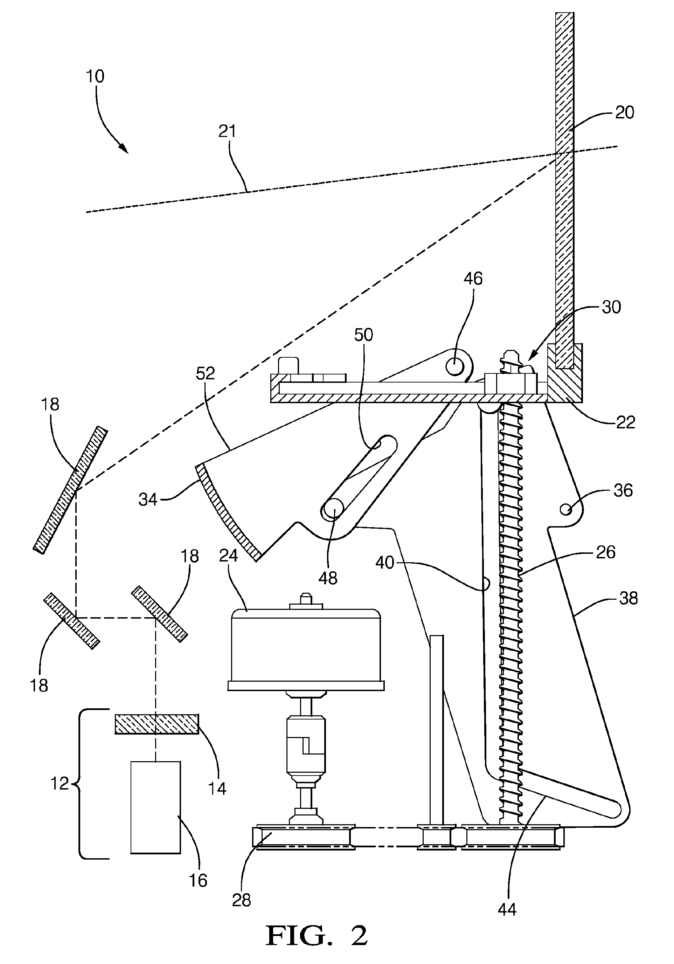

Les figures 1 et 2 montrent, de manière schématique, un dispositif d'affichage tête haute 10. Le dispositif 10 comprend un système d'escamotage du combineur. La figure 1 montre le dispositif 10 dans sa position inactive (combineur 20 en position de rangement) tandis que la figure 2 monte le dispositif 10 dans la position active (combineur 20 en position d'affichage).

Le dispositif 10 comprend un projecteur 12 pour générer un faisceau lumineux chargé de l'image représentant l'information à afficher au conducteur du véhicule. Le projecteur 12 comporte un afficheur à cristaux liquides 14 et une source de lumière 16 (cohérente ou non cohérente, en fonction du type de combineur, qui peut être diffractif ou réflectif) produisant un faisceau lumineux de rétroéclairage. L'afficheur à cristaux liquides 14 fonctionne en tant que modulateur de lumière dans l'espace et produit l'image qui sera affichée au conducteur. Le chemin optique entre le projecteur 12 et la position d'affichage du combineur 20 est défini par un système optique. Dans l'exemple illustré, celui-ci comprend plusieurs miroirs de déviation 18 qui renvoient le faisceau lumineux du projecteur 12 sur le combineur 20, lorsque celui-ci se trouve dans sa position d'affichage (figure 2).

Pendant le fonctionnement du dispositif 10, le faisceau lumineux chargé de l'image générée par l'afficheur à cristaux liquides 14 est dévié vers le conducteur du véhicule par le combineur 20. Par conséquent, du point de vue du conducteur, l'image apparaît comme image virtuelle derrière le combineur 20, sur l'axe oeil du conducteur - combineur 21. Le combineur 20 des figures 1 et 2 est à transmission.

Le combineur 20 est escamotable grâce à un système d'escamotage (mécanisme d'actionnement), discuté plus en détail ci-après. En plus de sa position d'affichage, le combineur 20 possède une position de rangement à l'intérieur du boîtier (non illustré) du dispositif d'affichage tête haute 10. Le combineur 20 est monté dressé sur un chariot élévateur 22 qui le déplace entre les positions d'affichage de rangement. Le chariot élévateur 22 est configuré pour exécuter une course en translation verticale. La trajectoire du chariot élévateur 22 est définie par des moyens de guidage (non illustrés aux figures 1 et 2) qui peuvent comprendre des rails, des tiges ou tout autre moyen de guidage approprié. Le chariot élévateur est entraîné via une transmission à vis d'entraînement (vis sans fin) par un moteur électrique 24. Le moteur est couplé à la vis d'entraînement 26 par une transmission à courroie 28. Lorsque le moteur 24 est en marche, la vis d'entraînement tourne sur elle-même. Le chariot élévateur 22 comprend un écrou 30 engagé sur la vis d'entraînement 26.

Pour protéger l'intérieur du boîtier du dispositif d'affichage tête haute 10 (p. ex. contre la poussière), l'ouverture de déploiement du combineur et l'ouverture permettant au faisceau lumineux de sortir du boîtier peuvent être fermées par des éléments d'obturation 32, 34 respectifs.

L'élément d'obturation 32 de l'ouverture de déploiement du combineur se présente sous la forme d'un clapet monté pivotant autour d'un axe 36. Le clapet 32 est solidaire d'un bras d'actionnement 38 doté d'une coulisse 40 coopérant avec un coulisseau 42 du chariot élévateur 22. Le tracé de la coulisse 40 est réalisé de telle sorte que le coulisseau 42, qui se déplace en translation verticale avec le chariot élévateur 22, fasse pivoter le bras d'actionnement 38 et donc le clapet 32 autour de l'axe 36 pendant au moins une partie de la course du chariot élévateur 22.

On note, en particulier, que la coulisse 40 est réalisée de sorte à ce que le clapet 32 soit hors du chemin du combineur 20 avant que le bord supérieur de celui-ci n'ait atteint le niveau de l'ouverture. Dans la position de rangement du combineur, le bord supérieur du combineur 20 se trouve à une certaine distance d du clapet 32. Par conséquent, le tronçon 44 de la coulisse que le coulisseau 42 parcourt sur la distance d au début de la course entre la position de rangement et la position d'affichage du combineur 20 a une forme telle que le clapet 32 est basculé entièrement hors du chemin du combineur 20.

L'élément obturateur 34 est aussi relié au système d'escamotage, plus particulièrement au bras d'actionnement 38. L'élément obturateur 34 est monté de sorte à pivoter autour d'un axe 46 par au moins un bras 52. Le bras d'actionnement 38 du clapet 32 lui sert d'actionneur. Quand le bras d'actionnement 38 est mû autour de l'axe 36, il met en rotation l'élément obturateur 34 autour de son axe 46. Dans l'exemple illustré, la liaison mécanique entre le bras d'actionnement 38 et l'élément obturateur 34 est assuré par un coulisseau 48, fixé au bras d'actionnement 38, qui glisse dans une coulisse 50 aménagée dans le bras 52 l'élément obturateur 34.

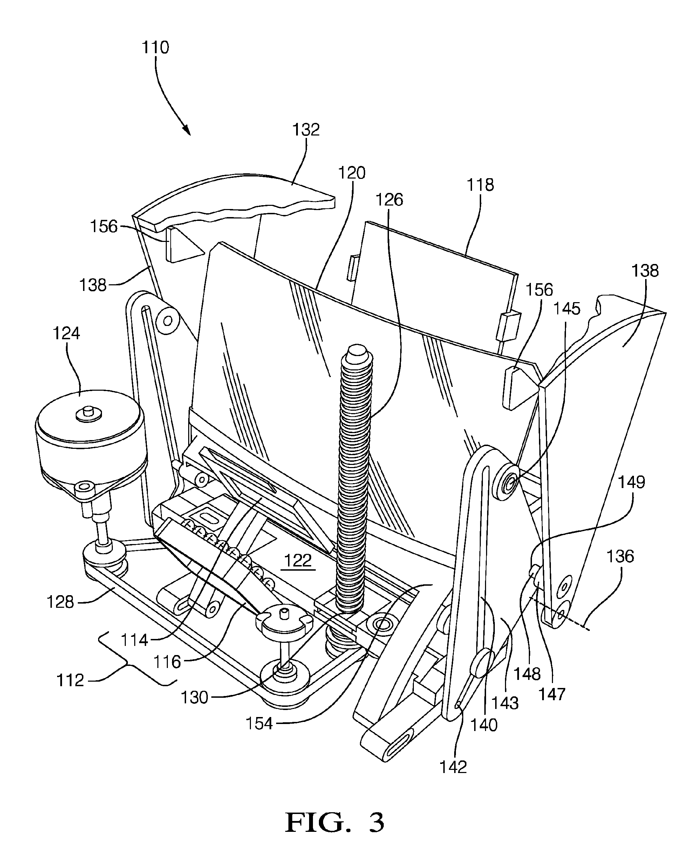

Les figures 3, 4 et 5 montrent, des vues tridimensionnelles des éléments fonctionnels intéressant l'invention d'un dispositif d'affichage tête haute 110 selon un mode de réalisation de l'invention.

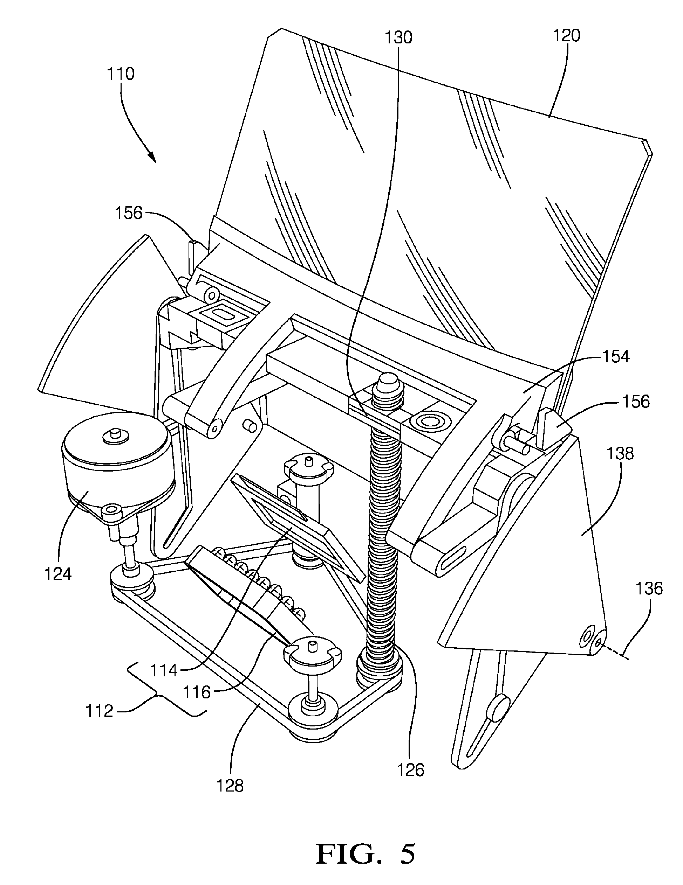

Le dispositif 110 comprend un projecteur 112 pour générer un faisceau lumineux chargé de l'image représentant l'information à afficher. Le projecteur 112 comporte un afficheur à cristaux liquides 114 et une source de lumière 116 (cohérente ou non cohérente, en fonction du type de combineur, qui peut être diffractif ou réflectif) produisant un faisceau lumineux de rétroéclairage. L'afficheur à cristaux liquides 114 fonctionne en tant que modulateur de lumière dans l'espace et produit l'image qui sera affichée au conducteur. Le chemin optique entre le projecteur 112 et la position d'affichage du combineur 120 est défini par un système optique. Dans l'exemple des figures 3 à 5, le système optique comprend un miroir de déviation 122 qui renvoie le faisceau lumineux du projecteur 112 sur le combineur 20, lorsque celui-ci se trouve dans sa position d'affichage (figure 5).

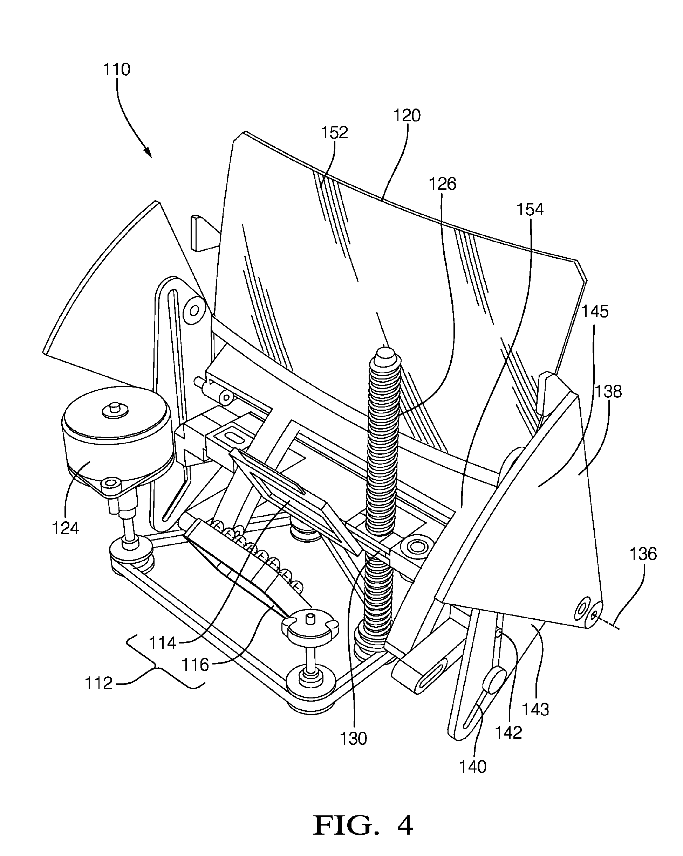

Le combineur 120 est escamotable grâce à un mécanisme d'actionnement. En plus de sa position d'affichage, le combineur 120 possède une position de rangement à l'intérieur du boîtier (non illustré) du dispositif d'affichage tête haute 110. Le combineur 120 est monté dressé sur un chariot élévateur 122 qui le déplace entre les positions de rangement (figure 3) et d'affichage (figure 5). La figure 4 montre une position intermédiaire. Le chariot élévateur 122 est configuré pour exécuter une course en translation verticale. La trajectoire du chariot élévateur 122 est définie par des moyens de guidage (non illustrés aux figures 3 à 5) qui peuvent comprendre des rails, des tiges ou tout autre moyen de guidage convenable. Le chariot élévateur 122 est entraîné via une transmission à vis d'entraînement par un moteur électrique 124. Le moteur 124 est couplé à la vis d'entraînement 126 par une transmission à courroie 128. Lorsque le moteur 124 est en marche, la vis d'entraînement 126 tourne sur elle-même. Le chariot élévateur 122 comprend un écrou 130 engagé sur la vis d'entraînement 126.

Pendant le fonctionnement du dispositif 110, le faisceau lumineux chargé de l'image générée par l'afficheur à cristaux liquides 114 est dévié vers le conducteur du véhicule par le combineur 120. Par conséquent, du point de vue du conducteur, l'image apparaît comme image virtuelle derrière le combineur 120, sur l'axe oeil du conducteur - combineur. Le combineur 120 des figures 3 à 5 est à réflexion.

Contrairement au mode de réalisation des figures 1 et 2, le dispositif des figures 3 à 5 présente une ouverture commune pour le déploiement du combineur et Ile passage du faisceau lumineux. Par conséquent, un élément d'obturation unique 132 est suffisant. L'élément d'obturation n'est montré qu'en partie à la figure 3 afin de ne pas cacher les composants se trouvant derrière lui.

L'élément d'obturation 132 est réalisé en tant que clapet monté pivotant autour d'un axe 136. Le clapet 132 est solidaire d'un bras d'actionnement 138 qui coopère avec le chariot élévateur 122 via un mécanisme à coulisses. Le chariot élévateur 122 est notamment doté d'un coulisseau 142 coopérant avec une coulisse 140 de la pièce de liaison 143. Le tracé de la coulisse 140 est réalisé de telle sorte que le coulisseau 142, qui se déplace en translation verticale avec le chariot élévateur 122, fasse pivoter la pièce de liaison 143 par rapport au boîtier (non illustré) autour de l'axe 145. La pièce de liaison 143 étant reliée au bras d'actionnement 138 via le coulisseau 147 et la coulisse 149 fait donc pivoter le clapet 132 autour de l'axe 136 pendant au moins une partie de la course du chariot élévateur 122.

Comme dans le mode de réalisation précédent, les mouvements du combineur 122 et du clapet 132 sont coordonnés de sorte à ce qu'il n'y ait pas de conflit (c.-à-d. le clapet 132 est écarté du chemin du combineur 120 avant que le bord supérieur de celui-ci n'ait atteint le niveau de l'ouverture de déploiement.)

Le combineur 120 est fixé à un support de combineur 154 qui est pivotable sur le chariot élévateur 122. Le support de combineur 154 est précontraint dans une certaine position par rapport au chariot élévateur 122 par un ressort (non illustré dans les figures 3 à 5), ce qui permet de maintenir le combineur 120 dressé sur le chariot élévateur 122. Lorsque la position d'affichage du combineur est atteinte, le support de combineur 154 vient en appui contre une ou plusieurs butées 156 (fixes par rapport au boîtier). En fin de course vers le haut, le chariot élévateur 122 appuie contre le ressort qui maintient le combineur 120 dressé. Il fait ainsi pivoter le combineur 120 d'un angle dépendant de sa fin de course. Par conséquent, l'angle d'inclinaison du combineur 120 dans la position d'affichage peut être ajusté par réglage de la fin de course du chariot élévateur 122.

Il convient de noter que le même principe de réglage de l'inclinaison du combineur peut être utilisé dans le mode de réalisation des figures 1 et 2.

Il sera apprécié que l'invention réduit considérablement le volume (l'espace) nécessaire pour le déploiement du combineur, et, par conséquent, la complexité d'intégration d'un dispositif d'affichage tête haute. L'intégration d'un dispositif d'affichage tête haute entre le tableau de bord et le pare-brise d'un véhicule automobile est donc facilitée en comparaison avec les dispositifs d'affichage tête haute de l'état de la technique.

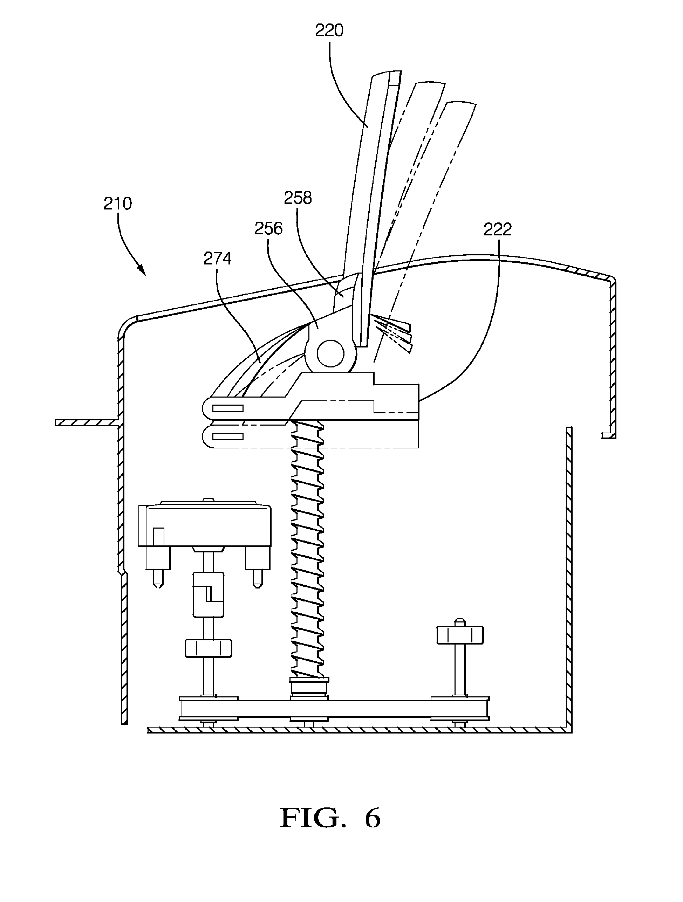

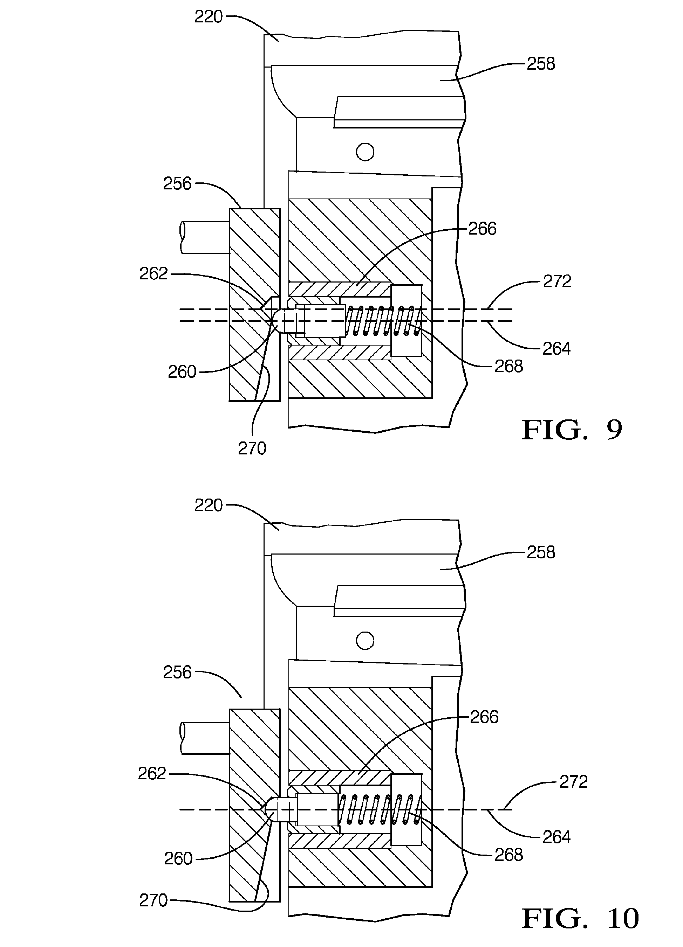

Les figures 6 à 10 montrent un détail d'un dispositif d'affichage tête haute 210 selon un mode de réalisation particulièrement avantageux de l'invention, dérivé du mode de réalisation des figures 3 à 5. La figure 6 montre une vue de côté du dispositif d'affichage tête haute 210 lorsque le chariot élévateur 222 et le combineur 220 se trouvent sur la dernière partie de leur trajectoire de translation.

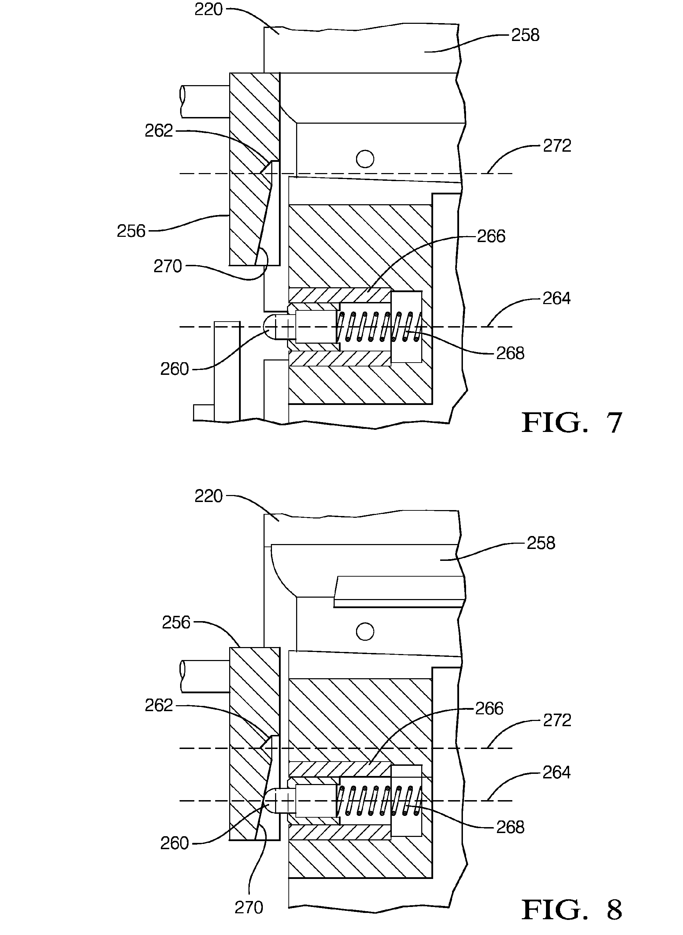

Les figures 7 à 10 sont des coupes dans le plan vertical comprenant l'axe de pivotement 264 du combineur 220, à différents stades en fin de course en translation du combineur 220. Les figures montrent une partie du socle 258 du combineur 220. Le socle 258 est solidaire du combineur 220 et peut pivoter avec lui, par rapport au chariot 222, sur un axe substantiellement horizontal. Le socle 258 comprend deux broches d'encliquetage 260 agencées de part et d'autre du socle 258 sur l'axe de pivotement. Chacune des broches 260 est destinée à s'encliqueter dans un creux 262 agencé dans une butée 256 respective qui limite le mouvement en translation du combineur 220.

La broche d'encliquetage 260 est montée axialement mobile sur l'axe de pivotement. La broche est maintenue sur l'axe de pivotement 264 par une douille de guidage 266 et est poussée vers l'extérieur du socle 258 par un ressort 268, de sorte à faire saillie sur le côté du socle 258 de combineur. Comme le montre la figure 8, la butée 256 coopérant avec la broche 260 présente une rampe 270 contre laquelle la broche 260 vient en appui lorsque le combineur 220 est mu de sa position de repos vers sa position d'affichage. En fin de course du combineur 220, la broche 260 est donc poussée par la rampe 270 à l'intérieur de la douille de guidage 266. A l'extrémité supérieure de la rampe 270 se trouve le creux 262, dont la forme correspond à peur près au négatif de la forme de la broche 260. Lorsque la broche 260 arrive à la hauteur du creux 262, le ressort 268 la pousse dans le creux 262, ce qui empêche la continuation du mouvement de translation du combineur 220 et de son socle 258. On note que la broche 260 et le creux 262 font fonction de moyens d'indexage qui définissent la position du combineur 220 à un degré de liberté près (c.-à-d. l'inclinaison du combineur.) Cette immobilisation permet de réduire de manière significative les vibrations du combineur 220 et donc de l'image virtuelle produite dans le champ de vision de l'utilisateur.

On rappelle que l'inclinaison du combineur (voir Fig. 6) peut être réglée par ajustage de la fin de course du chariot élévateur 222. Lorsque le combineur 220 et son socle 258 sont immobilisés sur l'axe 272 passant par les creux d'encliquetage, toute continuation du mouvement en translation du chariot élévateur résulte en un pivotement du combineur 220 autour de l'axe de pivotement 264 (qui coïncide alors avec l'axe 272 passant par les creux d'encliquetage.) En même temps, le ressort 274 (voir Fig. 6) qui maintenait le combineur 220 dressé sur le chariot 222 est tendu.
Lorsque le mouvement du chariot 222 est inversé, la tension de ce ressort 274 sert à redresser le combineur 220. Ensuite, les broches d'encliquetage 260 sont libérées et le combineur 220 est mu dans sa position d'escamotage tout en étant dressé sur le chariot élévateur 222.

| | | | |
|---|---|---|---|
| **Légende:** | | 120 | Combineur |
| | **Figures 1** **et** **2** | 122 | Chariot élévateur |
| 10 | Dispositif d'affichage tête haute | 124 | Moteur électrique |
| 12 | Projecteur | 126 | Vis d'entraînement |
| 14 | Afficheur à cristaux liquides | 128 | Transmission à courroie |
| 16 | Source de lumière | 130 | Ecrou |
| 18 | Miroir de déviation | 132 | Elément d'obturation |
| 20 | Combineur | 136 | Axe de pivotement de l'élément d'obturation 132 |
| 22 | Chariot élévateur | | |
| 24 | Moteur électrique | 138 | Bras d'actionnement |
| 26 | Vis d'entraînement | 140 | Coulisse |
| 28 | Transmission à courroie | 142 | Coulisseau |
| 30 | Ecrou | 143 | Pièce de liaison |
| 32 | Elément d'obturation | 145 | Axe de la pièce de liaison 143 |
| 34 | Elément d'obturation | 147 | Coulisseau |
| 36 | Axe de pivotement de l'élément d'obturation 32 | 149 | Coulisse |
| | | 154 | Support de combineur |
| 38 | Bras d'actionnement | 156 | Butée |
| 40 | Coulisse | | |
| 42 | Coulisseau | | **Figures 6 à 10** |
| 44 | Tronçon de coulisse | 210 | Dispositif d'affichage tête haute |
| 46 | Axe de pivotement de l'élément d'obturation 34 | 220 | Combineur |
| | | 222 | Chariot élévateur |
| 48 | Coulisseau | 256 | Butée |
| 50 | Coulisse | 258 | Socle du combineur |
| 52 | Bras | 260 | Broche d'encliquetage |
| | | 262 | Creux d'encliquetage |
| | **Figures 3 à 5** | 264 | Axe de pivotement |
| 110 | Dispositif d'affichage tête haute | 266 | Douille de guidage |
| 112 | Projecteur | 268 | Ressort |
| 114 | Afficheur à cristaux liquides | 270 | Rampe |
| 116 | Source de lumière | 272 | Axe passant par les creux d'encliquetage |
| 118 | Miroir de déviation | | |
| 274 | Ressort servant à maintenir le combineur dressé sur le chariot | | |

## Revendications

1. Dispositif d'affichage tête haute (110) comprenant :
un projecteur (112) pour générer un faisceau lumineux chargé d'une information à afficher,un combineur escamotable (120) ayant une position d'affichage pour afficher l'information dans le champ de vision d'un utilisateur et une position de rangement, ladite position d'affichage et ladite position de rangement se trouvant respectivement de part et d'autre d'une ouverture de déploiement du combineur;
un système optique (118) configuré de sorte à définir un chemin optique entre le projecteur et le combineur lorsque celui-ci se trouve dans sa position d'affichage ;
un mécanisme d'actionnement pour mouvoir le combineur depuis sa position de rangement dans sa position d'affichage et inversement ;
le mécanisme d'actionnement comprenant un chariot élévateur (122) portant le combineur (120), le mécanisme d'actionnement étant conçu de sorte que le chariot élévateur exécute une course en translation pour mouvoir le combineur entre sa position de rangement et sa position d'affichage ;
le dispositif d'affichage tête haute comprenant un élément obturateur (132) fermant ladite ouverture de déploiement lorsque le combineur se trouve dans sa position de rangement, l'élément obturateur étant lié au mécanisme d'actionnement de sorte à fermer, respectivement ouvrir l'ouverture de déploiement lors d'au moins une partie de la course en translation du chariot élévateur;
**caractérisé en ce que** le combineur est agencé pivotable sur le chariot élévateur de façon à ce que, dans la position d'affichage du combineur, la direction dans laquelle le combineur renvoie le faisceau lumineux chargé de l'information à afficher puisse être ajustée,
**en ce que** le combineur est maintenu dressé sur le chariot élévateur par un moyen de ressort pendant la course de celui-ci, le combineur venant en appui contre une butée (156) lorsqu'il a atteint sa position d'affichage, le chariot élévateur étant configuré pour tendre le moyen de ressort à la fin de sa course en translation et à ainsi faire pivoter le combineur sur le chariot élévateur, et **en ce que** la fin de course du chariot est réglable pour l'ajustage de la direction dans laquelle le combineur renvoie le faisceau lumineux chargé de l'information à afficher.

2. Dispositif selon la revendication 1, dans lequel le mécanisme d'actionnement comprend un moyen de guidage, p.ex. un rail, une tige, une rainure, etc., définissant la trajectoire du chariot élévateur.

3. Dispositif selon la revendication 1 ou 2, dans lequel le mécanisme d'actionnement comprend un moyen d'entraînement, p.ex. un moteur électrique (124).

4. Dispositif selon la revendication 1, 2 ou 3, dans lequel le chariot élévateur est déplaçable en translation grâce à une transmission à vis d'entraînement (126), une transmission à courroie (128), une transmission de pignon-crémaillère.

5. Dispositif selon l'une quelconque des revendications 1 à 4, dans lequel l'élément obturateur (132) comprend un bras d'actionnement (138) et pivote autour d'un axe (136), ledit bras d'actionnement coopérant avec le chariot élévateur par un mécanisme à au moins une coulisse (140), l'au moins une coulisse ayant un tracé conçu de sorte que l'élément obturateur pivote autour de son axe lors de l'au moins une partie de la course en translation du chariot élévateur.

6. Dispositif selon l'une quelconque des revendications 1 à 5, dans lequel le chemin optique entre le projecteur et le combineur , lorsque celui-ci se trouve dans sa position d'affichage, passe par l'ouverture de déploiement du combineur, et dans lequel l'élément obturateur interrompt donc le chemin optique lorsqu'il ferme l'ouverture de déploiement.

7. Dispositif selon l'une quelconque des revendications 1 à 5, dans lequel le chemin optique entre le projecteur et le combineur lorsque celui-ci se trouve dans sa position d'affichage, passe par une deuxième ouverture, la deuxième ouverture pouvant être fermée par un deuxième élément obturateur (34), le deuxième élément obturateur (34) étant lié au mécanisme d'actionnement de sorte à fermer ou ouvrir la deuxième ouverture lors d'au moins une partie de la course en translation du chariot élévateur.

8. Dispositif selon la revendication 7, dans lequel le deuxième élément obturateur (34) est monté pivotant et relié à l'élément obturateur (132) de l'ouverture de déploiement de sorte à être entraîné simultanément avec l'élément obturateur de l'ouverture de déploiement.

9. Dispositif (210) selon l'une quelconque des revendications 1 à 8, comprenant des moyens d'indexage (260, 262) définissant la position d'affichage du combineur (220), l'unique degré de liberté non défini par les moyens d'indexage étant l'inclinaison du combineur.

10. Dispositif (210) selon la revendication 9, dans lequel les moyens d'indexage comprennent une broche d'encliquetage (260) agencée sur un socle (258) du combineur, qui est solidaire de celui-ci, ainsi qu'un creux (262) d'encliquetage, apte à recevoir la broche d'encliquetage lorsque le combineur se trouve en position d'affichage et servant comme ladite butée (256).

## Patentansprüche

1. Head-Up-Anzeigevorrichtung (110), enthaltend:
einen Projektor (112) zum Erzeugen eines Lichtstrahls, der mit einer anzuzeigenden Information belegt ist, einen versenkbaren Kombinierer (120) mit einer Anzeigeposition zum Anzeigen der Information in dem Sichtfeld eines Benutzers und einer Verstauposition, wobei die Anzeigeposition und die Verstauposition beiderseits einer Ausklappöffnung des Kombinierers liegen;
ein optisches System (118), das so konfiguriert ist, dass ein Lichtweg zwischen dem Projektor und dem Kombinierer definiert wird, wenn dieser sich in seiner Anzeigeposition befindet;
einen Betätigungsmechanismus zum Bewegen des Kombinierers aus seiner Verstauposition in seine Anzeigeposition und umgekehrt;
wobei der Betätigungsmechanismus einen Hubwagen (122) aufweist, der den Kombinierer (120) trägt, wobei der Betätigungsmechanismus derart ausgelegt ist, dass der Hubwagen einen Verschiebeweg zurücklegt, um den Kombinierer zwischen seiner Verstauposition und seiner Anzeigeposition zu bewegen;
wobei die Head-Up-Anzeigevorrichtung ein Verschlusselement (132) aufweist, das die Ausklappöffnung dann verschließt, wenn der Kombinierer sich in seiner Verstauposition befindet, wobei das Verschlusselement mit dem Betätigungsmechanismus verbunden ist, so dass bei zumindest einem Teil des Verschiebewegs des Hubwagens die Ausklappöffimng verschlossen bzw. geöffnet wird;
**dadurch gekennzeichnet, dass** der Kombinierer verschwenkbar am Hubwagen so angeordnet ist, dass in der Anzeigeposition des Kombinierers die Richtung, in welcher der Kombinierer den mit der anzuzeigenden Informationen belegten Lichtstrahl weiterleitet, abgestimmt werden kann,
dass der Kombinierer über ein Federmittel auf dem Hubwagen während dessen Verlagerung aufrecht gehalten wird, wobei der Kombinierer in Anlage an einen Anschlag (156) gelangt, wenn er seine Anzeigeposition erreicht hat, wobei der Hubwagen derart ausgelegt ist, dass das Federmittel am Ende seines Verschiebewegs gespannt wird und somit der Kombinierer am Hubwagen verschwenkt wird, und dass die Endlage des Hubwagens zum Abstimmen der Richtung einstellbar ist, in welcher der Kombinierer den mit der anzuzeigenden Information belegten Lichtstrahl weiterleitet.

2. Vorrichtung nach Anspruch 1, wobei der Betätigungsmechanismus eine Führungseinrichtung aufweist, beispielsweise eine Schiene, eine Stange, eine Nut, usw., welche die Wegstrecke des Hubwagens definiert.

3. Vorrichtung nach Anspruch 1 oder 2, wobei der Betätigungsmechanismus eine Antriebseinrichtung, beispielsweise einen Elektromotor (124), aufweist.

4. Vorrichtung nach Anspruch 1, 2 oder 3, wobei der Hubwagen mit Hilfe eines Getriebes mit Gewindetrieb (126), eines Riemenantriebs (128), eines Ritzel-Zahnstangen-Getriebes verschiebbar ist.

5. Vorrichtung nach einem der Ansprüche 1 bis 4, wobei das Verschlusselement (132) einen Betätigungsann (138) aufweist und um eine Achse (136) herum schwenkt, wobei der Betätigungsarm über einen Mechanismus mit zumindest einer Kulisse (140) mit dem Hubwagen zusammenwirkt, wobei die zumindest eine Kulisse einen Verlauf hat, der so ausgelegt ist, dass das Verschlusselement bei zumindest einem Teil des Verschiebewegs des Hubwagens um seine Achse herum schwenkt.

6. Vorrichtung nach einem der Ansprüche 1 bis 5, wobei der Lichtweg zwischen dem Projektor und dem Kombinierer dann, wenn dieser in seiner Anzeigeposition ist, durch die Ausklappöffnung des Kombinierers durchtritt und wobei das Verschlusselement somit den Lichtweg dann unterbricht, wenn es die Ausklappöffnung verschließt.

7. Vorrichtung nach einem der Ansprüche 1 bis 5, wobei der Lichtweg zwischen dem Projektor und dem Kombinierer dann, wenn dieser in seiner Anzeigeposition ist, durch eine zweite Öffnung tritt, wobei die zweite Öffnung mit einem zweiten Verschlusselement (34) verschließbar ist, wobei das zweite Verschlusselement (34) mit dem Betätigungsmechanismus so verbunden ist, dass die zweite Öffnung bei zumindest einem Teil des Verschiebewegs des Hubwagens verschlossen bzw. geöffnet wird.

8. Vorrichtung nach Anspruch 7, wobei das zweite Verschlusselement (34) verschwenkbar gelagert und mit dem Verschlusselement (132) der Ausklappöffnung so verbunden ist, dass es gleichzeitig mit dem Verschlusselement der Ausklappöffnung mitgenommen werden kann.

9. Vorrichtung (210) nach einem der Ansprüche 1 bis 8, enthaltend Indexierungsmittel (260, 262), welche die Anzeigeposition des Kombinierers (220) definieren, wobei der einzige Freiheitsgrad, der nicht von den Indexierungsmitteln definiert wird, die Neigung des Kombinierers ist.

10. Vorrichtung (210) nach Anspruch 9, wobei die Indexierungsmittel einen Raststift (260) aufweisen, der an einem Sockel (258) des Kombinierers angeordnet und fest mit diesem verbunden ist, sowie eine Rastvertiefung (262), die dazu geeignet ist, den Raststift dann aufzunehmen, wenn der Kombinierer sich in der Anzeigeposition befindet, und als Anschlag (256) dient.

## Claims

1. Head-up display device (110) comprising:
a projector (112) for generating a light beam conveying information to be displayed, a retractable combiner (120) having a display position for displaying the information in the field of view of a user and a storage position, said display position and said storage position being situated on respective opposite sides of a combiner deployment aperture;
an optical system (118) configured to define an optical path between the projector and the combiner when the latter is in its display position;
an actuating mechanism for moving the combiner from its storage position into its display position and vice versa;
the actuating mechanism comprising a lifter carriage (122) bearing the combiner (120), the actuating mechanism being designed so that the lifter carriage performs a translational stroke to move the combiner between its storage position and its display position;
the head-up display device comprising a shutter member (132) closing said deployment aperture when the combiner is in its storage position, the shutter member being connected to the actuating mechanism so as to close and open the deployment aperture during at least part of the translational stroke of the lifter carriage;
**characterized in that** the combiner is pivotable on the lifter carriage so that, in the display position of the combiner, the direction in which the combiner diverts the light beam conveying the information to be displayed can be adjusted,
**in that** the combiner is held upright on the lifter carriage by spring means during the stroke thereof, the combiner coming into abutment against a stop (156) when it has reached its display position, the lifter carriage being configured to stretch the spring means at the end of its translational stroke and thereby to pivot the combiner on the lifter carriage, and **in that** the end of the carriage stroke is adjustable for adjusting the direction in which the combiner diverts the light beam conveying the information to be displayed.

2. Device according to Claim 1, wherein the actuating mechanism comprises guide means, e.g. a rail, a rod, a groove, etc., defining the path of the lifter carriage.

3. Device according to Claim 1 or 2, wherein the actuating mechanism comprises drive means, e.g. an electric motor (124).

4. Device according to Claim 1, 2 or 3, wherein the lifter carriage is movable in translation by a screw drive transmission (126), a belt transmission (128), a rack and pinion transmission.

5. Device according to any one of Claims 1 to 4, wherein the shutter member (132) comprises an actuating arm (138) and pivots about an axis (136), said actuating arm cooperating with the lifting carriage via a mechanism with at least one slide (140), the at least one slide having a path such that the shutter member pivots about its axis during at least part of the translational stroke of the lifter carriage.

6. Device according to any one of Claims 1 to 5, wherein the optical path between the projector and the combiner, when the latter is in its display position, passes through the combiner deployment aperture, and wherein the shutter member therefore interrupts the optical path when it closes the deployment aperture.

7. Device according to any one of Claims 1 to 5, wherein the optical path between the projector and the combiner, when the latter is in its display position, passes through a second aperture, the second aperture being closable by a second shutter member (34), the second shutter member (34) being connected to the actuating mechanism so as to close or open the second aperture during at least part of the translational stroke of the lifter carriage.

8. Device according to Claim 7, wherein the second shutter member (34) is pivotally mounted and connected to the shutter member (132) of the deployment aperture so as to be driven simultaneously with the shutter member of the deployment aperture.

9. Device (210) according to any one of Claims 1 to 8, comprising indexing means (260, 262) defining the display position of the combiner (220), the sole degree of freedom not defined by the indexing means being the inclination of the combiner.

10. Device (210) according to Claim 9, wherein the indexing means comprise a latching pin (260) arranged on a base (258) of the combiner, which is integral with the latter, and a latching hollow (262) adapted to receive the latching pin when the combiner is in the display position and serving as said stop (256).
